(19) Europäisches Patentamt
European Patent Office
Office européen des brevets

(11) **EP 3 022 101 B1**

(12) **EUROPÄISCHE PATENTSCHRIFT**

(45) Veröffentlichungstag und Bekanntmachung des Hinweises auf die Patenterteilung:
**06.09.2017  Patentblatt 2017/36**

(21) Anmeldenummer: **14738452.3**

(22) Anmeldetag: **03.07.2014**

(51) Int Cl.:
**B60T 13/74** *(2006.01)*      **B60T 1/00** *(2006.01)*
**F16H 63/16** *(2006.01)*

(86) Internationale Anmeldenummer:
**PCT/EP2014/064225**

(87) Internationale Veröffentlichungsnummer:
**WO 2015/007535 (22.01.2015 Gazette 2015/03)**

(54) **ELEKTROHYDRAULISCHER AKTUATOR**

ELECTROHYDRAULIC ACTUATOR

ACTIONNEUR ÉLECTROHYDRAULIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.07.2013  DE 102013213888**

(43) Veröffentlichungstag der Anmeldung:
**25.05.2016  Patentblatt 2016/21**

(73) Patentinhaber: **Robert Bosch GmbH**
**70442 Stuttgart (DE)**

(72) Erfinder:
• **KOHLER, Stephan**
  **77815 Buehl (DE)**
• **KRUEGER, Hartmut**
  **77815 Buehl (DE)**
• **DURIX, Lucas**
  **F-67410 Drusenheim (FR)**

(56) Entgegenhaltungen:
**DE-A1-102011 078 360    GB-A- 2 351 129**

EP 3 022 101 B1

**Beschreibung**

Die Erfindung betrifft einen elektrohydraulischen Aktuator. Insbesondere betrifft die Erfindung einen Aktuator zur Betätigung eines hydraulischen Systems an Bord eines Kraftfahrzeugs.

Stand der Technik

In der DE 10 2011 078360 A1 und der GB 2 351 129 A wird der allgemeine Stand der Technik definiert, der für die vorliegende Erfindung relevant ist.
Ein System an Bord eines Kraftfahrzeugs, beispielsweise einer Kupplungs- oder Bremsanlage, kann hydraulisch betätigt werden. Bei einem üblichen Kraftfahrzeug, das mittels eines Verbrennungsmotors angetrieben wird, kann der hydraulische Druck durch eine Pumpe bereitgestellt werden, die mit dem Verbrennungsmotor gekoppelt ist. Manchmal ist es wünschenswert, den hydraulischen Druck auch unabhängig von dem Verbrennungsmotor bereitstellen zu können. Beispielsweise kann in einem Elektro- oder Hybridfahrzeug nicht unter allen Umständen davon ausgegangen werden, dass Drehmoment von einer Antriebsmaschine für das Kraftfahrzeug bereitsteht, um die Pumpe anzutreiben oder Unterdruck vom Ansaugrohr bereitsteht, um einen Unterdruck-Bremskraftverstärker zu unterstützen. Ein elektrohydraulischer Aktuator umfasst einen elektrischen Antrieb und eine hydraulische Pumpe. Der Antrieb wirkt auf die Pumpe, die einen hydraulischen Druck eines Fluids zur Betätigung beispielsweise der Kupplung oder der Bremse bereitstellt. In einer Ausführungsform wird dabei eine Axialpumpe verwendet, die einen hydraulischen Zylinder mit einem Kolben umfasst, der mittels eines Spindeltriebs axial betätigt werden kann. Der Spindeltrieb umfasst eine Spindel und eine Mutter, wobei die Spindel mittels einer Verdrehsicherung gegen Verdrehen gesichert ist und die Mutter mittels des Elektromotors verdrehbar ist. Um die Drehbewegung des Elektromotors auf die Mutter zu übertragen und dabei zu verlangsamen kann beispielsweise ein Schneckengetriebe verwendet werden.

Aufgrund der unvermeidlichen Reibung zwischen der Mutter und der Spindel sowie den Verzahnungskräften an der Mutter wirkt, wenn der Elektromotor läuft, nicht nur ein Drehmoment, sondern auch eine Kippkraft auf die Mutter. Dadurch kann eine radiale Kraft auf den Kolben übertragen werden, die den Kolben an die Zylinderwand presst. Der Kolben oder eine Kolbendichtung kann dadurch einem erhöhten Verschleiß ausgesetzt sein. Insbesondere bei einem sicherheitsrelevanten System wie einem elektrohydraulischen Aktuator für ein Bremssystem kann es entscheidend sein, die volle Leistungsfähigkeit des Aktuators auch über ausgedehnte Betriebsperioden sicherzustellen.

Es ist daher Aufgabe der vorliegenden Erfindung, einen elektrohydraulischen Aktuator anzugeben, der einen verringerten Verschleiß des Kolbens bereitstellt. Die Erfindung löst diese Aufgabe mittels eines elektrohydraulischen Aktuators mit den Merkmalen des unabhängigen Anspruchs. Unteransprüche geben bevorzugte Ausführungsformen wieder.

Offenbarung der Erfindung

Ein elektrohydraulischer Aktuator umfasst einen hydraulischen Kolben, einen Spindeltrieb zur Bewegung des Kolbens entlang einer Drehachse, wobei der Spindeltrieb eine Spindel und eine Mutter umfasst, und ein Schneckenrad, das koaxial an der Mutter angebracht ist. Ferner ist ein Elektromotor mit einer Schnecke, die mit dem Schneckenrad kämmt, vorgesehen. Die Mutter ist mittels eines Lagers radial und axial abgestützt, außerdem besteht zur Sicherung der Spindel gegen Verdrehen eine einarmige Verdrehsicherung. Zwischen einem Angriffspunkt der Schnecke am Schneckenrad und der Wirkrichtung der Verdrehsicherung ist ein Winkel bezüglich der Drehachse eingeschlossen. Dabei ist der Winkel so gewählt, dass bei einem vorbestimmten auf die Mutter wirkenden Drehmoment eine auf den Kolben wirkende Radialkraft minimiert ist.

Durch die passende Wahl des Winkels ist es möglich, die durch den Elektromotor eingebrachten Kippkräfte auf die Spindel teilweise oder vollständig zu kompensieren. Durch die Minimierung der auf den Kolben wirkenden Radialkräfte kann ein Verschleiß des Kolbens bzw. eines Dichtmittels des Kolbens gegenüber einem hydraulischen Zylinder verringert sein. Die Leistungsfähigkeit des Aktuators kann daher auch nach häufiger Betätigung sichergestellt sein. Eine Leckage zwischen dem Kolben und dem Zylinder kann verringert sein und ein durch den Aktuator bereitgestellter hydraulischer Druck kann auch nach einer längeren Betriebsperiode sicher gestellt sein.

Es ist nicht erforderlich, ein zweites Lager einzusetzen, um den Kolben bzw. die Spindel radial abzustützen. Dadurch können ein Gewicht und ein Bauraum eingespart werden, sodass der Aktuator kompakter und leichter ausgeführt sein kann. Außerdem können durch das nicht erforderliche zweite Lager Kosten in der Herstellung eingespart werden.

In einer Ausführungsform erlaubt das Radiallager eine vorbestimmte Verkippung der Mutter gegenüber der Drehachse. Ein Verkippwinkel der Spindel gegenüber der Drehachse kann durch das Lager beschränkt sein. Der Verkippwinkel kann einen Achsversatz oder einen Winkelfehler zwischen der Hydraulikeinheit, die den Kolben und gegebenenfalls einen ihn umgebenden Zylinder umfasst, und der Getriebeeinheit mit der Spindel ausgleichen. Akzeptable Toleranzen einzelner Bauteile des Aktuators können vergrößert sein, wodurch Produktionskosten eingespart werden können. Außerdem kann durch den Spielausgleich ein Verschleiß im Betrieb des Aktuators verringert sein. Das Radiallager kann beispielsweise vorteilhaft als Wälzlager, insbesondere als Radial-Rillenkugellager, ausgeführt sein. Auf diese Weise kann ein leistungsfähiges und verschleißarmes Standardbauteil verwendet werden, um die begrenzte Verkippbarkeit der Spindel bereitzustellen.

In einer weiter bevorzugten Ausführungsform ist das Radiallager in axialer Richtung zwischen der Mutter und der Verdrehsicherung angeordnet. Dadurch kann ein kompakter Aufbau des Aktuators erzielt werden. Außerdem können so die Kräfte am Aktuator verbessert gegeneinander ausgeglichen werden, um sich gegenseitig aufzuheben.

Es ist ferner bevorzugt, dass der Winkel bezüglich einer vorbestimmten axialen Stellung der Spindel bestimmt ist. Ein wirksamer Hebel zwischen dem Kolben und einem Verkipppunkt der Spindel kann die Radialkräfte am Kolben beeinflussen. Durch Berücksichtigung der Stellung der Spindel kann der Aktuator auf einen vorbestimmten Betriebspunkt abgestimmt werden. Die Stellung der Spindel kann beispielsweise einer Betätigung der Kupplung oder Bremse an Bord des Kraftfahrzeugs entsprechen, für das der Aktuator vorgesehen ist.

Der Winkel kann auch bezüglich eines vorbestimmten Reibungskoeffizienten zwischen der Schnecke und dem Schneckenrad bestimmt sein. Der Reibungskoeffizient kann relativ genau bestimmt werden und beispielsweise durch den Einsatz eines Schmiermittels auch unter unterschiedlichen Betriebsbedingungen und über eine längere Betriebszeit hinaus bestimmbar sein.

Ferner ist bevorzugt, dass das auf die Mutter wirkende Drehmoment über eine maximale in axialer Richtung auf den Kolben wirkende Kraft bestimmt ist. Die Kraft kann auf der Basis eines Betriebs- oder Maximaldrucks bestimmbar sein, die durch den Kolben auf ein hydraulisches Fluid ausgeübt werden soll. Durch die Bestimmung des Drehmoments auf der Basis der Axialkraft auf den Kolben kann der Aktuator auf verbesserte Weise so ausgelegt werden, dass die Radialkräfte am Kolben bei üblicher bzw. maximaler Systemlast verringert sind.

Kurze Beschreibung der Figuren

Die Erfindung wird nun mit Bezug auf die beigefügten Figuren genauer beschrieben, in denen:

Figur 1     einen elektrohydraulischen Aktuator;
Figur 2     den Aktuator aus Figur 1 in einer weiteren Ansicht;
Figur 3     ein Kräfte- und Momentendiagramm am Aktuator der Figuren 1 und 2, und
Figur 4     ein weiteres Kräfte- und Momentendiagramm am Aktuator der Figuren 1 und 2

darstellt.

Genaue Beschreibung von Ausführungsformen

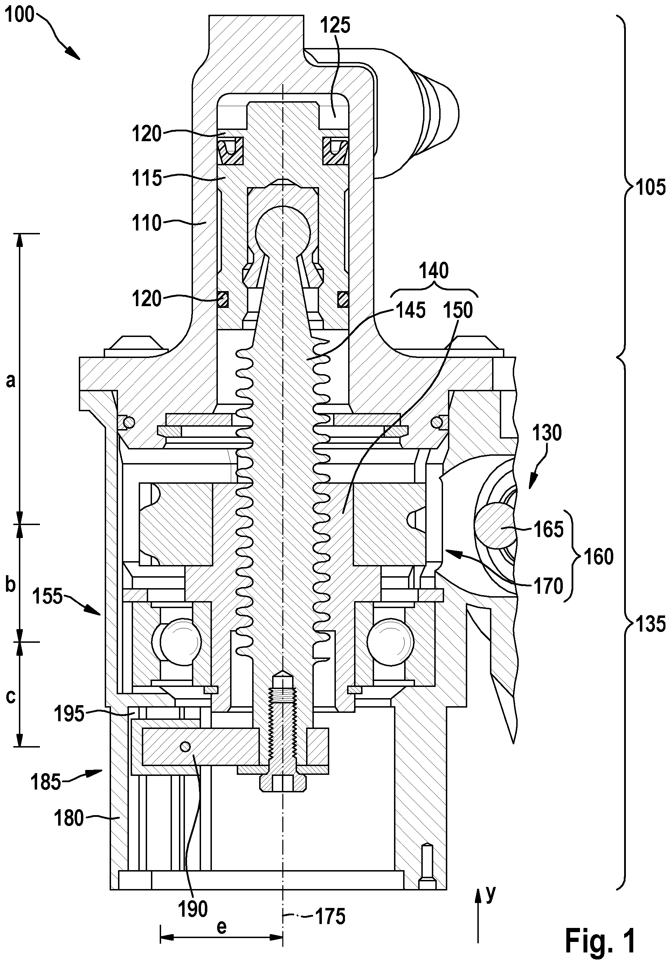

Figur 1 zeigt einen elektrohydraulischen Aktuator 100 zur Bereitstellung eines hydraulischen Drucks, insbesondere zur Betätigung einer Bremse oder einer Kupplung an Bord eines Kraftfahrzeugs. Der Aktuator 100 umfasst ein Hydraulikmodul 105, das einen Zylinder 110 und einen darin aufgenommenen Kolben 115 umfasst. Zur Abdichtung des Kolbens 115 gegenüber dem Zylinder 110 ist bevorzugterweise ein Kolbenring 120 oder eine andere Radialdichtung vorgesehen. Im Zylinder 115 ist ein Hydraulikfluid 125 aufgenommen, welches unter Druck gesetzt wird, wenn der Kolben 115 in den Zylinder 110 eingeschoben wird.

Ferner umfasst der Aktuator 100 einen Elektromotor 130 und eine Getriebeeinheit 135 zur Umsetzung einer Bewegung des Elektromotors 130 auf das Hydraulikmodul 105. Die Getriebeeinheit 135 umfasst einen Spindeltrieb 140, der seinerseits eine Spindel 145 und eine Mutter 150 umfasst, ein Radiallager 155 sowie ein Schneckengetriebe 160, das eine Schnecke 165 und ein Schneckenrad 170 umfasst. Die Schnecke 165 kämmt im Schneckenrad 170, wobei eine Drehachse des Elektromotors 130 einen Winkel mit der Darstellungsebene einschließt, sodass ein Angriffspunkt der Schnecke 165 am Schneckenrad 170 in Figur 1 nicht sichtbar ist. Das Schneckenrad 170 ist koaxial an der Mutter 150 formschlüssig angebracht und beide Elemente sind um eine Drehachse 175 drehbar. Die Drehachse 175 verläuft windschief zur Drehachse des Elektromotors 130. Das Radiallager 155 ist in radialer Richtung bevorzugterweise zwischen der Mutter 150 bzw. dem Angriffspunkt der Schnecke 165 am Schneckenrad 170 und der Verdrehsicherung 185 angeordnet.

Die Mutter 150 mit dem Schneckenrad 170 ist mittels des Radiallagers 155 gelagert, beispielsweise gegenüber einem Gehäuse 180. Das Radiallager 155 ist bevorzugterweise als Wälzlager, insbesondere als Kugellager ausgeführt. Dabei erlaubt das Radiallager 155 bevorzugterweise ein gewisses Verkippen der Mutter 150 gegenüber der Bewegungsrichtung des Kolbens 115. Die Drehachse 175 kann so einen vorbestimmten maximalen Verkippwinkel zur Bewegungsrichtung des Kolbens 115 einnehmen. Durch das Erlauben des Verkippwinkels können ein Achsversatz oder ein Winkelfehler zwischen der Drehachse 175 und der Bewegungsrichtung des Kolbens 115 ausgeglichen werden.

An einem ersten Ende ist die Spindel 145 am Kolben 115 angebracht. In der dargestellten Ausführungsform trägt die Spindel 145 am ersten Ende eine Kugel und der Zylinder 115 eine dazu korrespondierende Kugelpfanne, sodass Axialkräfte zwischen der Spindel 145 und dem Kolben 115 austauschbar sind, während eine Verkippung des Kolbens 115 durch die Spindel 145 verhindert ist. An ihrem gegenüberliegenden, zweiten Ende der Spindel 145 ist eine Verdrehsicherung 185 angebracht. Die Verdrehsicherung 185 umfasst einen Hebelarm 190, der sich in radialer Richtung erstreckt, und eine axiale Nut 195, in der ein radial äußeres Ende des Hebelarms 190 aufgenommen ist. Andere Ausführungsformen, die ein Verdrehen des Hebelarms 190 gegenüber dem Gehäuse 180 verhindern und gleichzeitig eine axiale Bewegung erlauben, sind ebenfalls möglich, beispielsweise eine Gleitschiene. Um das Verkippen der Mutter 150 zu unterstützen, ist es bevorzugt, dass die Verdrehsicherung 185 keine radialen bzw. Kippkräfte aufnimmt.

Ein Koordinatensystem in Figur 1 ist nur teilweise dargestellt. Die y-Richtung verläuft parallel zur Drehachse 175, die z-Richtung parallel zur Welle des Elektromotors 130. Die x-Richtung bildet mit der y-Richtung und der z-Richtung ein Rechtssystem.

Ferner sind in Figur 1 folgende Maße definiert:

a axialer Abstand zwischen dem Angriffspunkt der Spindel 145 am Kolben 115 und dem Angriffspunkt der Schnecke 165 am Schneckenrad 170;
b axialer Abstand zwischen dem Radiallager 155 und dem Angriffspunkt der Schnecke 165 am Schneckenrad 170;
c axialer Abstand zwischen dem Radiallager 155 und der Verdrehsicherung 185;
d radialer Abstand der Drehachse 175 und des Angriffspunkts zwischen der Schnecke 165 und dem Schneckenrad 170 (nicht sichtbar), und
e radialer Abstand des Mitten-Abstützpunktes der Verdrehsicherung 185 zur Drehachse 175.

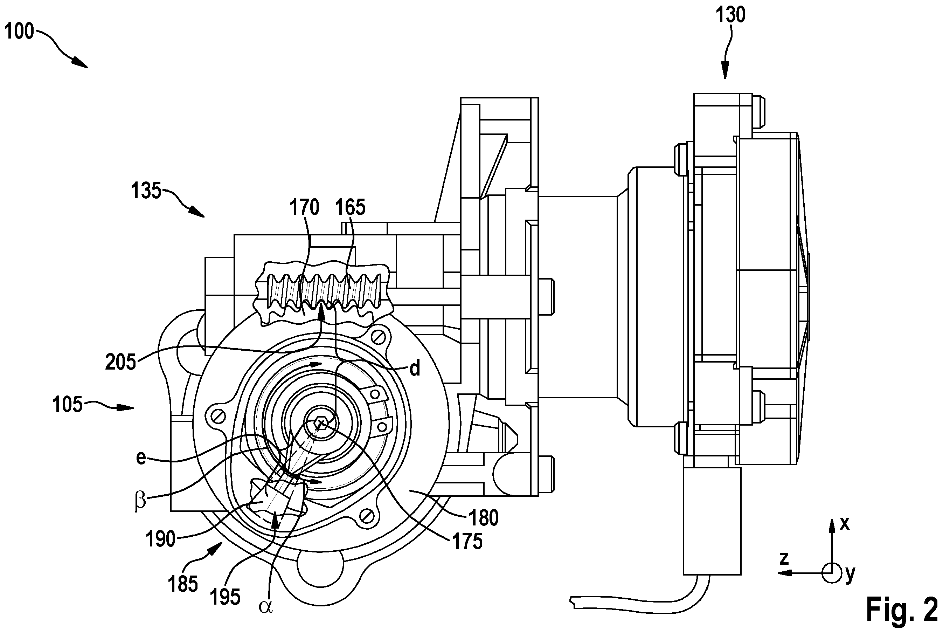

Figur 2 zeigt den Aktuator 100 in einer weiteren Ansicht. Die Drehachse 175 bzw. die Bewegungsachse des Kolbens 115 im Zylinder 110 verläuft senkrecht zur Darstellungsebene. In der Darstellungsebene verläuft in horizontaler Richtung die Drehachse des Elektromotors 100, die windschief zur Drehachse 175 verläuft. In einem Teilschnitt sind die Schnecke 165 und das Schneckenrad 170 dargestellt, die miteinander kämmen. Ein Angriffspunkt 205 bezeichnet dabei den Punkt, an dem eine Zug- bzw. Schubkraft zwischen der Schnecke 165 und dem Schneckenrad 170 übertragen wird. Der Angriffspunkt 205 hat einen vorbestimmten Abstand und eine vorbestimmte Ausrichtung zur Drehachse 175.

In ähnlicher Weise ist die Verdrehsicherung 185 teilweise freigeschnitten. Der Lagerpunkt des Hebelarms 190 an der Nut 195 weist eine vorbestimmte rotatorische Ausrichtung gegenüber der Drehachse 175 und einen vorbestimmten Abstand zu ihr auf. Die rotatorische Ausrichtung wird auch Wirkrichtung genannt. Ein Winkel zwischen der Wirkrichtung und einem Radius, der die Drehachse 175 mit dem Angriffspunkt 205 verbindet, wird $\beta$ genannt. Ein zweiter Winkel $\alpha$ ergänzt $\beta$ zu 180°. Die Wirkrichtung ist bezüglich einer Mittellinie des Hebelarms 190 dargestellt. Für eine genauere Bestimmung kann die Wirkrichtung stattdessen durch die wirksame Kontaktfläche zwischen dem Hebelarm 190 und der Nut 195 und die Drehachse 175 verlaufen. Bei einer üblichen Belastung des Aktuators 100 ist die wirksame Kontaktfläche die in Fig. 2 rechts dargestellte.

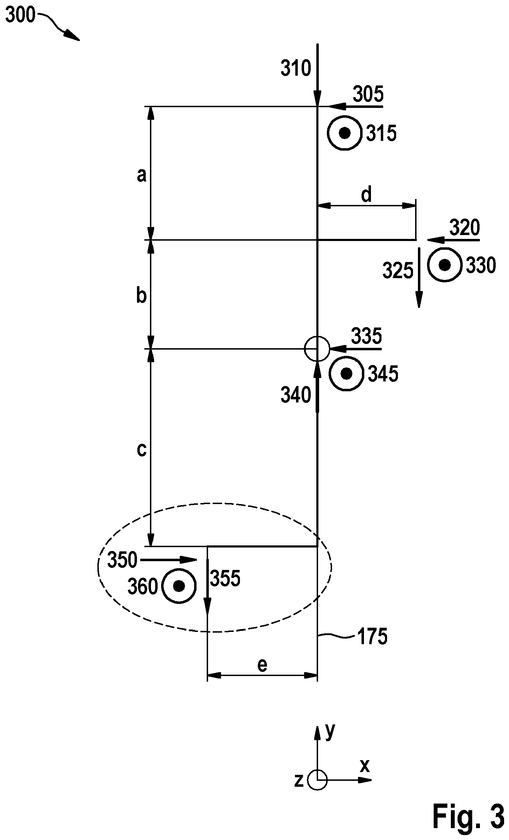

Figur 3 zeigt ein Kräfte- und Momentendiagramm am Aktuator 100 der Figuren 1 und 2. Die Ausrichtung entspricht der von Figur 1. Von oben nach unten beziehen sich die dargestellten Kräfte auf den Kolben 115, das Schraubenrad 170, das Radiallager 155 und die Verdrehsicherung 185. Die Kräfte der Verdrehsicherung 185, die in einer Ellipse mit unterbrochener Linie dargestellt sind, sind um den Winkel $\alpha$ aus der Bildebene gedreht. Zur weiteren Erläuterung werden folgende Bezeichnungen verwendet:

| | |
|---|---|
| $F_{x\_Kolben}$ | 305 |
| $F_{y\_Kolben}$ | 310 |
| $F_{z\_Kolben}$ | 315 |
| $F_{x\_Schraubrad}$ | 320 |
| $F_{y\_Schraubrad}$ | 325 |
| $F_{z\_Schraubrad}$ | 330 |
| $F_{x\_Lager}$ | 335 |
| $F_{y\_Lager}$ | 340 |
| $F_{z\_Lager}$ | 345 |
| $F_{x\_Verdrehsicherung}$ | 350 |
| $F_{y\_Verdrehsicherung}$ | 355 |
| $F_{z\_Verdrehsicherung}$ | 360 |
| $F_{Verdrehsicherung}$ | 365 |

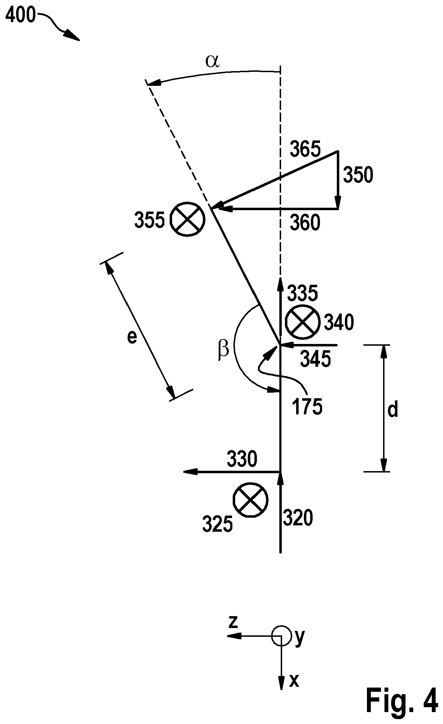

Figur 4 zeigt ein weiteres Kräfte- und Momentendiagramm 400 am Aktuator 100 der Figuren 1 und 2. Die Darstellung entspricht der von Figur 3 aus einer anderen Perspektive. Die gewählte Ansicht entspricht der von Figur 2.

Um die radial auf den Kolben 115 wirkenden Kräfte zu minimieren, muss $F_{Kolben}$ minimiert werden. Dabei gilt:

$$F_{Kolben} = \sqrt{F_{x\_Kolben}{}^2 + F_{y\_Kolben}{}^2}$$

$$F_{x\_Verdrehsicherung} = F_{Verdrehsicherung} * \sin\alpha$$

$$F_{z\_Verdrehsicherung} = F_{Verdrehsicherung} * \cos\alpha$$

$$F_{y\_Verdrehsicherung} = F_{Verdrehsicherung} * \mu$$

$$\mu = Gleitreibungszahl$$

Kräfte- und Momentenbilanz:

$$\sum F_x = -F_{x\_Kolben} - F_{x\_Schraubrad} - F_{x\_Lager} + F_{x\_Verdrehsicherung} = 0$$

$$\sum F_y = -F_{y\_Kolben} - F_{y\_Schraubrad} + F_{y\_Lager} - F_{y\_Verdrehsicherung} = 0$$

$$\sum F_z = F_{z\_Kolben} + F_{z\_Schraubrad} + F_{z\_Lager} + F_{z\_Verdrehsicherung} = 0$$

$$\sum M_x = F_{z\_Kolben}(a+b) + F_{z\_Schraubrad}b - F_{z\_Verdrehsicherung}c + F_{y\_Verdrehsicherung}e\sin\alpha = 0$$
$$\sum M_y = -F_{z\_Schraubrad}d + F_{Verdrehsicherung}e = 0$$

$$\sum M_z = F_{x\_Kolben}(a+b) + F_{x\_Schraubrad}b - F_{y\_Schraubrad}d + F_{x\_Verdrehsicherung}c + F_{y\_Verdrehsicherung}e\cos\alpha = 0$$

Gegebene, bekannte Größen:

- Die maximal wirkende Kolbenkraft $F_{y\_Kolben}$
- Die maximal wirkenden Verzahnungskräfte $F_{x\_Schraubrad}$, $F_{y\_Schraubrad}$, $F_{z\_Schraubrad}$
- Die Bauraumverhältnisse a, b, c, d, e
- Die Gleitreibungszahl $\mu$, beispielsweise als 0,15 angenommen.

Unbekannte Größen:

$$F_{x\_Kolben}$$

$$F'_{z\_Kolben}$$

$$F_{Verdrehsicherung}$$

$$\alpha$$

$$F_{x\_Lager}$$

$$F'_{y\_Lager}$$

$$F_{z\_Lager}$$

Die Kräfte $F_{x\_Kolben}$ und $F_{z\_Kolben}$ sind als Größenbeschränkung vorgegeben. Insbesondere kann eine resultierende, radial auf den Kolben 115 wirkende Kraft, die sich aus $F_{x\_Kolben}$ und $F_{z\_Kolben}$ zusammensetzt, in ihrer Größe als Designvorgabe beschränkt sein. Diese Designvorgabe kann sich aus Erfahrungswerten bezüglich des Verschleißverhaltens des Kolbens 115 und des Zylinders 110 ergeben Beispielsweise kann vorgegeben sein, dass die radiale Kolbenkraft einen bestimmten Betrag nicht überschreiten darf, wenn der Aktuator 100 sich in einem vorbestimmten Betriebspunkt befindet. Der Betriebspunkt kann beispielsweise durch einen hydraulischen Betriebsdruck des Hydraulikfluids 125 oder eine Position der Spindel 145 entlang der Drehachse 175 gegeben sein.

Um die radialen Kolbenkräfte zu minimieren, ist $\alpha$ zu optimieren. Beispielsweise kann $\alpha$ in einem Reihenversuch auf unterschiedliche Werte gesetzt werden, während das oben angegebene System aus sechs Gleichungen bezüglich der verbleibenden sechs unbekannten Größen aufgelöst wird. Das Gleichungssystem ist daher bestimmt und es existiert stets eine eindeutige Lösung. $\alpha$ wird dann so gewählt, dass $F_{x\_Kolben}$ und $F_{z\_Kolben}$ minimiert sind, sodass die radial auf den Kolben 115 wirkende Kraft ebenfalls minimiert ist.

**Patentansprüche**

1. Elektrohydraulischer Aktuator (100), umfassend:

   - einen hydraulischen Kolben (115);
   - einen Spindeltrieb (140) mit einer Spindel (145) und einer Mutter (150), zur Bewegung des Kolbens (115) entlang einer Drehachse (175);
   - ein Schneckenrad (170), das koaxial an der Mutter (150) angebracht ist;
   - einen Elektromotor (130) mit einer Schnecke (165), die mit dem Schneckenrad (170) kämmt;
   - ein Radiallager (155) zur Abstützung der Mutter (150),
   - eine einarmige Verdrehsicherung (185) zur Sicherung der Spindel (145) gegen Verdrehen,
   - wobei zwischen einem Angriffspunkt (205) der Schnecke (165) am Schneckenrad (170) und der Wirkrichtung der Verdrehsicherung (185) ein Winkel (β) bezüglich der Drehachse (175) eingeschlossen ist,

   **dadurch gekennzeichnet, dass**

   - der Winkel (β) so gewählt ist, dass bei einem vorbestimmten auf die Mutter (150) wirkenden Drehmoment eine auf den Kolben (115) wirkende Radialkraft minimiert ist.

2. Aktuator (100) nach Anspruch 1, wobei das Radiallager (155) eine vorbestimmte Verkippung der Mutter (150) gegenüber der Drehachse (175) erlaubt.

3. Aktuator (100) nach Anspruch 1 oder 2, wobei das Radiallager (155) in axialer Richtung zwischen der Mutter (150) und der Verdrehsicherung (185) angeordnet ist.

4. Aktuator (100) nach einem der vorangehenden Ansprüche, wobei der Winkel (β) bezüglich einer vorbestimmten axialen Stellung der Spindel (145) bestimmt ist.

5. Aktuator (100) nach einem der vorangehenden Ansprüche, wobei der Winkel (β) bezüglich eines vorbestimmten Reibungskoeffizienten (μ) zwischen der Schnecke (165) und dem Schneckenrad (170) bestimmt ist.

6. Aktuator (100) nach einem der vorangehenden Ansprüche, wobei das auf die Mutter (150) wirkende Drehmoment über eine maximale in axialer Richtung (x, z) auf den Kolben (115) wirkende Kraft bestimmt ist.

**Claims**

1. Electrohydraulic actuator (100) comprising

   - a hydraulic piston (115);
   - a spindle drive (140), comprising a spindle (145) and a nut (150), for moving the piston (115) along an axis of rotation (175);
   - a worm wheel (170), which is attached coaxially to the nut (150);
   - an electric motor (130) having a worm (165), which meshes with the worm wheel (170);
   - a radial bearing (155) for supporting the nut (150),
   - a single-armed rotation-prevention mechanism (185) for securing the spindle (145) against rotation,
   - wherein an angle (β) with respect to the axis of rotation (175) is included between a point of action (205) of the worm (165) on the worm wheel (170) and the direction of action of the rotation-prevention mechanism (185),

   **characterized in that**

   - the angle (β) is selected in such a way that, for a predetermined torque acting on the nut (150), a radial force acting on the piston (115) is minimized.

2. Actuator (100) according to Claim 1, wherein the radial bearing (155) allows a predetermined tilt of the nut (150) relative to the axis of rotation (175).

3. Actuator (100) according to Claim 1 or 2, wherein the radial bearing (155) is arranged between the nut (150) and the rotation-prevention mechanism (185) in the axial direction.

4. Actuator (100) according to one of the preceding claims, wherein the angle (β) is determined with respect to a predetermined axial position of the spindle (145).

5. Actuator (100) according to one of the preceding claims, wherein the angle (β) is determined with respect to a predetermined friction coefficient (μ) between the worm (165) and the worm wheel (170).

6. Actuator (100) according to one of the preceding claims, wherein the torque acting on the nut (150) is determined by way of a maximum force acting on the piston (115) in the axial direction (x, z).

**Revendications**

1. Actionneur électrohydraulique (100), comprenant:

   - un piston hydraulique (115);
   - un entraînement à broche (140) avec une broche (145) et un écrou (150), pour le déplacement du piston (115) le long d'un axe de rotation (175);
   - une roue à vis sans fin (170), qui est montée coaxialement à l'écrou (150);
   - un moteur électrique (130) avec une vis sans fin (165), qui engrène avec la roue à vis sans fin (170);
   - un palier radial (155) pour supporter l'écrou (150);

- un blocage de rotation à bras unique (185) pour bloquer la broche (145) contre la rotation,
- dans lequel un angle ($\beta$) par rapport à l'axe de rotation (175) est formé entre un point d'attaque (205) de la vis sans fin (165) sur la roue à vis sans fin (170) et la direction d'action du blocage de rotation (185),

**caractérisé en ce que**

- l'angle ($\beta$) est choisi de telle manière qu'une force radiale agissant sur le piston (115) soit minimisée pour un couple de rotation prédéterminé agissant sur l'écrou (150).

2. Actionneur (100) selon la revendication 1, dans lequel le palier radial (155) permet une inclinaison prédéterminée de l'écrou (150) par rapport à l'axe de rotation (175).

3. Actionneur (100) selon la revendication 1 ou 2, dans lequel le palier radial (155) est disposé en direction axiale entre l'écrou (150) et le blocage de rotation (185).

4. Actionneur (100) selon l'une quelconque des revendications précédentes, dans lequel l'angle ($\beta$) est déterminé par rapport à une position axiale prédéterminée de la broche (145).

5. Actionneur (100) selon l'une quelconque des revendications précédentes, dans lequel l'angle ($\beta$) est déterminé par rapport à un coefficient de frottement prédéterminé ($\mu$) entre la vis sans fin (165) et la roue à vis sans fin (170).

6. Actionneur (100) selon l'une quelconque des revendications précédentes, dans lequel le couple de rotation agissant sur l'écrou (150) est déterminé par une force maximale agissant en direction axiale (x, z) sur le piston (115).

Fig. 1

EP 3 022 101 B1

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011078360 A1

- GB 2351129 A